# EUROPEAN PATENT APPLICATION

(11) **EP 0 768 076 A1**
(43) Date of publication of application: **16.04.1997**
(21) Application number: 95920725.9
(22) Date of filing: 08.06.1995
(51) Int. Cl.: A61G 5/04

(54) **MOTORIZED WHEELCHAIR**

(30) Priority: 11.06.1994 CN 94242035
(71) Applicant: Fujian Star Computer Co. Ltd., Fuzhou, Fujian 35001 (CN)
(72) Inventor: HUANG, Shanjun, Fujian 350001 (CN); ZHENG, Jun, Fujian 350001 (CN); CHENG, Chunyi, Fujian 350001 (CN); WANG, Sutan, Fujian 350001 (CN); LI, Lin, Fujian 350001 (CN); CHEN, Xiaohang, Fujian 350001 (CN)
(74) Representative: von Puttkamer, Nikolaus, Dipl.-Ing. Patentanwälte Haft, von Puttkamer Berngruber, Czybulka
(86) International application number: CN9500047
(87) International publication number: WO9534267

(57) **Abstract**

A motorized wheelchair includes a seat section, a driving section and a controlling section. Said driving section comprises four wheels, four electric motors for driving the wheels, and speed reducers; wherein each of said wheels is driven by an electric motor, and includes a plurality of ratable rollers around the perimeter thereof; the angle between the direction of the axis around which said roller rotates and the direction of the wheel axis is α, along the wheel axis and along the direction which is perpendicular to the said wheel axis and parallell to the ground surface, each of the said angles (α) in two adjacent wheels is equal, and the directions of said rollers are not parallel.

## Description

### FIELD OF TECHNICAL

This invention relates to a motorized wheelchair, especially to an omnidirectional motorized wheelchair.

### BACKGROUND

For prior motorized wheelchairs, they are usually featured with one-wheel or double-wheel drive and ordinary solid or inflated tyres used in their wheels, and except their forward and backward and turning movement, neither transverse nor non-radius turn at origin, in which its rotation center coincides with the center of gravity, is allowed, still less its oblique movement. Obviously, they are inappropriate for the case the wheelchairs are used in offices, apartments, and shopping malls.

On this account, the purpose of this invention is to create an omnidirectional motorized wheelchair, which not only involves the movements as backward and forward motion and rotation, like present motorized wheelchairs, but can also allow right and left motion and composites of all the previous movement as well.

### SUMMARY OF THE INVENTION

A kind of motorized wheelchair broached in this invention comprises seat section, drive section and control section, wherein the drive section includes four wheels, wheel driving motors and decelerators. The improvements of this wheelchair lie in:
each of the said wheels is motivated by an independent motor, several rotable rollers are fixed around the flange of each wheel, and the direction of axis which the rollers revolve about crosses the axial direction of the wheel axle with an angle of α. Moreover, the said angle between the axial direction of the wheel axle and the rollers distributed around the adjacent wheel perpendicular to the axial direction is of the equal magnitude but in reverse direction with the said angle of α.

When the electric motor drive the wheel to rotate, the rollers contact with the ground, so frictional forces are applied on the rollers. And the friction forces acting on the wheels vary by its' magnitudes and directions, according to the changing of the wheel rotation directions and rotation velocities. Consequently, under the effect of the combined movements of the wheels, the motorized wheelchair can move in an omnidirectional way.

Wherein the said angle of α with forty five degrees in the said motorized wheelchair is preferred.

Wherein the said rollers with the shape of spindle in the said motorized wheelchair are preferred.

Wherein the said roller consisting of two half-spindles and a transfusion pin penetrating the two half-spindles is preferred.

wherein the said rollers can be hinged with the radial supporting arms embodied on the flange of wheel.

wherein the preferable control section mentioned contains a guide handle, which could oscillate in three dimensions and adopts three potentiometers, and controlling drive circuit, which processes signals sent by the guide handle and actuates the electric motor.

Another style of the motorized wheelchair is also available in this invention, wherein each wheel is actuated by an independent electric motor, several rotable rollers are fixed around the flange of each wheel, and the roller axis is perpendicular to the axial direction of wheel axle. Also, the rollers are distributed discontinuely along the flange of wheel, and there is dead interval between two neighboring rollers along the axial direction of the wheel axle. Furthermore, the wheels are also evenly located around an distribution circle centered at the seat center and the axial direction of the wheel axle is in the diametrical direction in the distribution circle.

Detailed illustration to this invention, accompanying with drawings attached, is provided below.

### BRIEF DESCRIPTION OF ACCOMPANYING DRAWINGS

Figure 1 is a front view of an embodiment of the omnidirectional motorized wheelchair of this invention.

Figure 2 is a side view of the motorized wheelchair shown in Fig. 1.

Figure 3 is a side view of the motorized wheelchair proposed in this invention.

Figure 4 is a perspective view of another embodiment of wheel in the motorized wheelchair of this invention.

Figure 5 is an appearance view of the motorized wheelchair of the embodiment shown in Fig. 4.

Figure 6 is a side view of another type of wheel.

Figure 7 is an illustrative drawing showing distribution of the wheels.

### THE DETAILED DESCRIPTION OF A PREFERRED EMBODIMENT

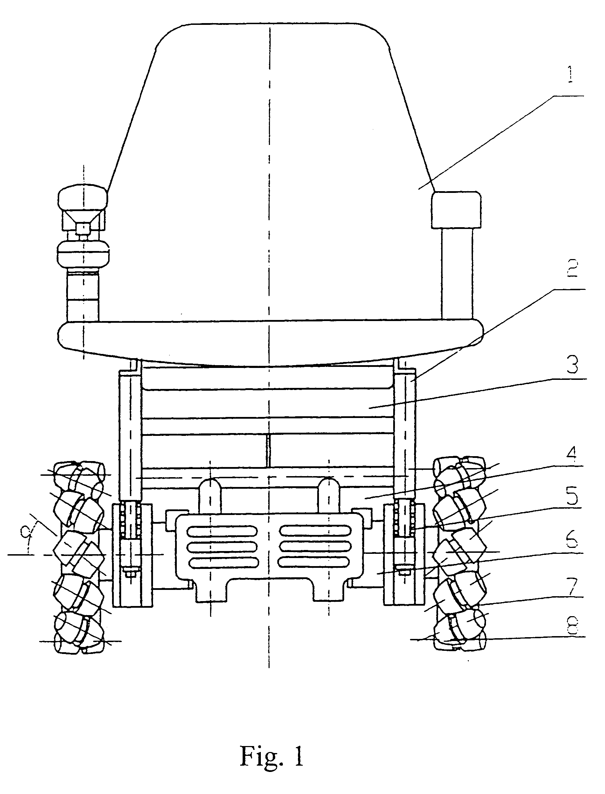

An embodiment of present invention is shown from Figure 1 to Figure 3.

Omnidirectional motorized wheelchair of present invention includes drive section, control section, and seat section, wherein the seat section consists of one seat 1 and chair frame 2. Because of the improvements of present invention are not related to seat section, more detailed discussion is suspended here.

Drive section in the motorized wheelchair mentioned in this invention locates at the lower part of the seat section and comprises wheels 7, motors 4, decelerators 6 and vibration dampers 5. The four wheels 7 are respectively driven by four independent motors 4 through their correspondent decelerators 6.

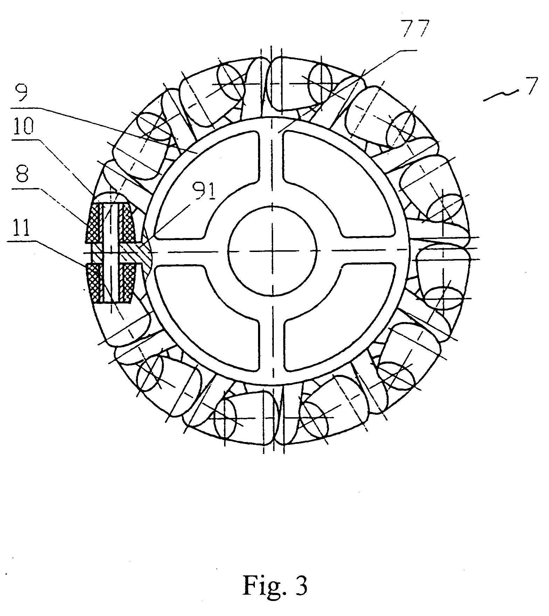

As is shown in Figure 3, one wheel 7 of the motorized wheelchair mentioned in present invention includes a wheel ring 77 and many rotable rollers 8, which are rotably hinged to connect with the wheel ring 77. The wheel ring 77 includes a flange of wheel 9 connected solidly with the wheel hub in the wheel ring by radial strengthening ribs, and many radial supporting arms 91 are formed around the circular flange of wheel. And each radial supporting arm bears one pore and an angle exists between the pore axis and axis of the wheel axle in wheel 7, here, the angle is acute.

Every roller 8 is shaped as spindle in general and consists of two half-spindles 11 and a transfixing pin 10 which penetrates the two half-spindles and gets them fixed, while there is some distance along the axial direction of the transfixing pin between the two half-spindles which form a roller 8. The roller 8 is fixed on the flange of wheel 9 in such a way that to press one transfixing pin 10 into the pore in the radial supporting arm 91, then two half-spindles of a roller 8 are fixed respectively on both sides of the radial supporting arm 91. Since axis of the pore in the radial supporting arm 91 forms an acute angle of α with axis of the wheel axle. In present preferred embodiment, the acute angle is forty five degrees and totally twenty four rollers 8 are fixed along periphery of the flange of wheel 9.

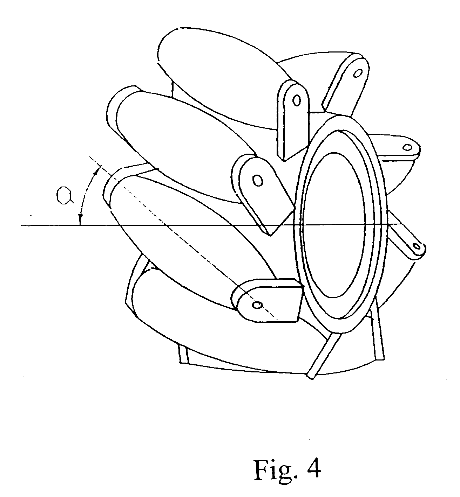

The available structure of wheel 7 in this invention shown in Figure 4 is also reasonable. The roller 8 given in this drawing is a whole spindle penetrated by a transfixing pin and ends of the transfixing pin can be rotably jointed with the radial supporting arms which stick out from both edges of the flange of wheel.

The spindle-shaped roller 8 in this invention is preferred, for the sake of ensuring the function of omnidirectional movement of the motorized wheelchair and minimizing frictional forces as possible. Of course, other shape of the rollers are also valid in the motorized wheelchair.

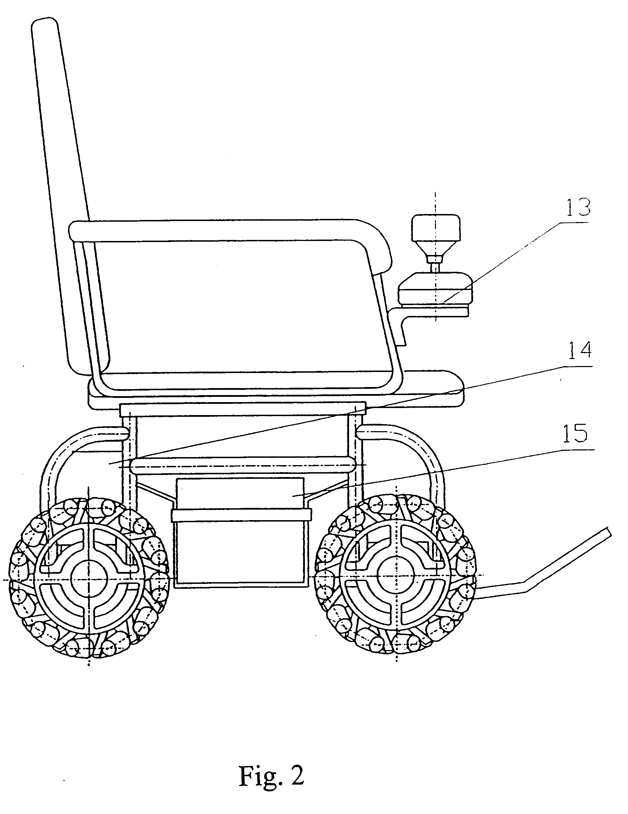

From Figure 1, it should be noted that in order to ensure the motorized wheelchair to move in right and left direction, which is parallel to the axial direction of the wheel axle, the rollers on the two facing wheels 8 both of which lie in the axial direction of the wheel axle in wheel 7 slant reversibly, while the two acute angles formed by axes of two rollers on the two facing wheels 7 with axis of wheel axle are equal in magnitude. At the same time, in order to ensure the motorized wheelchair to revolve on its own axis without radius, rollers on the two same side wheels of the direction normal to the axial direction of the wheel axle similarly slant in opposite way, but the magnitudes of them are same either, which are presented in Figure 2.

By the four wheels with characteristic configuration mentioned above, when their rotation directions and rotation velocities are both the same, the motorized wheelchair could move forward and backward longitudinally; when the neighboring wheels, which refer to two wheels next to each other in axial direction of the wheel axle and two wheels next to each other on the same side of direction normal to the axial direction of the wheel axle, turn in reverse direction with same rotation speed, the motorized wheelchair could transverse to right or left; when two wheels on the same side of direction normal to axial direction of the wheel axle, turn in same direction, and the different side wheels turn in opposite direction, moreover, their rotation speeds are the same, the motorized wheelchair turn on its own axis without radius, when rotation directions and rotation speeds of the wheels are among the conditions discussed above, the combined movements of the motorized wheelchair is produced.

The control section in this invention includes electric control box 3, charge 14, guide handle 13 and battery 15, ect.. Guide handle 13 is set upon the arm of the wheelchair, can oscillate in three dimensions, and contain three potentiometers which guide the motorized wheelchair to move forward and backward or to the right and left, and to rotate correspondingly. Electric control box 3 is installed at the lower part of the seat section; wherein signals sent by the guide handle is processed by a controlling drive circuit, calculated by a microprocessor and amplified, then drive the motor to realize the corresponding motion. Charge 14 installed at the lower and rear part of the seat section converts the alternating current to directing current and charge battery 15. Battery 15 installed at the lower part of the seat section supplies electric power to actuate motors to turn.

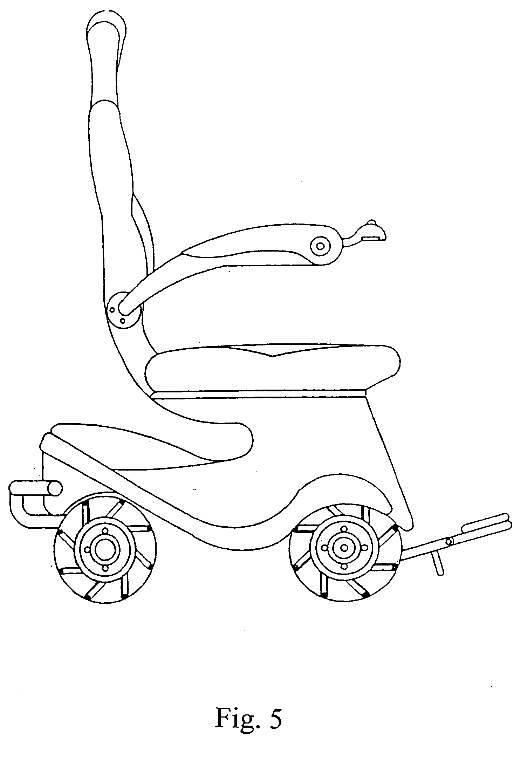

An appearance view of the motorized wheelchair of the invention is given in Figure 5.

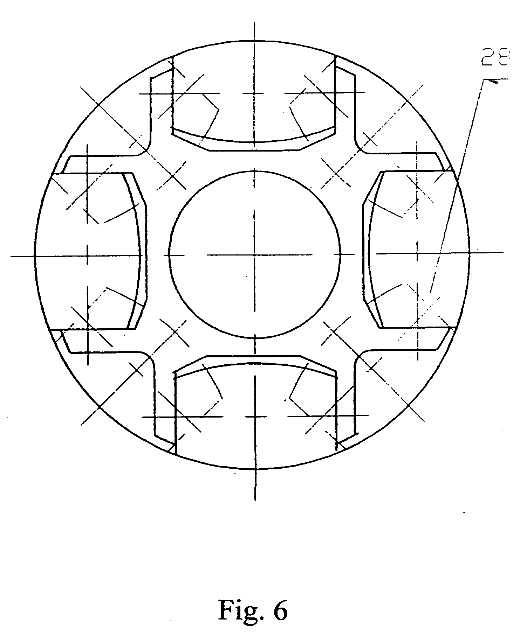

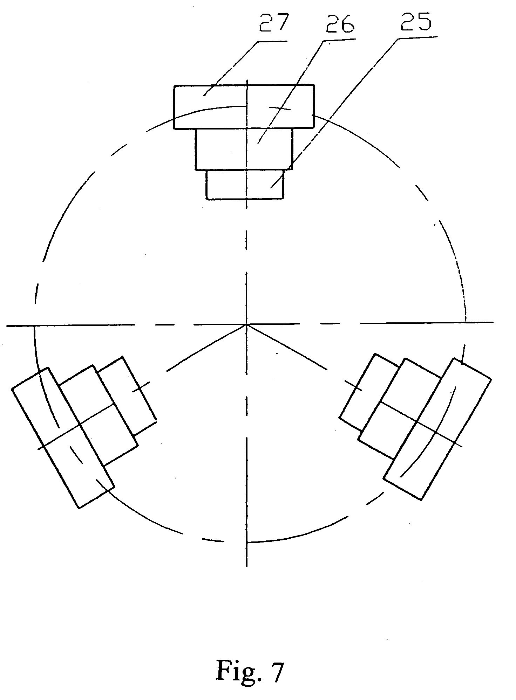

Figure 6 and Figure 7 present another embodiment of this invention. It contains drive section, control section and seat section. Difference between this embodiment and the previous one is that, this embodiment involves three wheels driven by three motors 25 and three decelerators 26 respectively, the three wheels are distributed along a circle centered at the chair center, axial direction of the wheel 27 axle is in radial direction of the circle, the circular angle between both of the wheels is one hundred and twenty degrees, eight rollers 28, whose rotation axis is perpendicular to the axis of the wheel axle, are distributed with interval around the flange of wheel, for convenient fixation, there is interval between two rollers in axial direction of the wheel axle, and the circular angle between two adjacent rollers on the flange of wheel is forty five degrees.

By the motorized wheelchair composing three said wheels, when the front wheel does not turn, while two rear wheels turn in different directions ( one to right and one to left), and their rotation speeds bear no variety, the motorized wheelchair moves forward; when the three wheels turn in same direction and their rotation speeds are also the same, the motorized wheelchair rotates on its own axis without radius; when the front wheel turns oppositely to the two rear wheels and rotation speed of the front wheel is one point seven times as much as those of the two rear wheels, the motorized chair moves to the right and left; when rotation directions and rotation speeds of the wheelchair are among the conditions mentioned before, the motorized wheelchair will get a combined movement.

### INDUSTRIAL UTILITY

By the said mechanism in the motorized wheelchair, the motorized wheelchair shares the function of omnidirectional movement, it is especially appropriate for the old and the disable, who have some difficulties in walking alone, to use in narrow spaces, such as apartments, offices, shopping malls, hotels and hospitals, ect., and can act as high quality chair in offices and resting chair at home.

## Claims

1. A motorized wheelchair comprising seat section, drive section and control section, and the said drive section including four wheels, wheel driving motors and decelerators; It characterizes in that each of the said wheels is motivated by an independent motor, several rotable rollers are fixed around the wheel flange in every wheel, and the axial direction which the said roller revolves about crosses the axial direction of the wheel axle with an angle of a. Moreover, the said angle between the axial direction of the wheel axle and the rollers distributed around the adjacent wheel perpendicular to the axial direction is of the equal magnitude, but in reverse direction.

2. A motorized wheelchair as claimed in claim 1, wherein the said angle of α is forty five degrees.

3. A motorized wheelchair as claimed in claim 1 or claim 2, wherein the said roller is in the shape of spindle.

4. A motorized wheelchair as claimed in claim 3, wherein the said roller consists of two half-spindles and a transfixing pin penetrating the two half-spindles.

5. A motorized wheelchair as claimed in claim 3, wherein the said roller can be hinged with the radial supporting arms sticking out from the flange of wheel.

6. A motorized wheelchair as claimed in claim 1, wherein the said control section contains a guide handle, which could oscillate in three dimensions and adopts three potentiometers, and controlling drive circuit, which processes signals sent by the guide handle and actuates the electric motor.

7. A motorized wheelchair comprising seat section, drive section and control section, and the said drive section including four wheels, wheel driving motors and decelerators; It characterizes in that each wheel is actuated by an independent electric motor, several rotable rollers are fixed around the flange of each wheel, and the roller axis is perpendicular to the axial direction of wheel axle. Also, the rollers are distributed discontinuely along the flange of wheel, and there is dead interval between two neighboring rollers along the axial direction of the wheel axle. Furthermore, the wheels are also evenly located around an distribution circle centered at the seat center and the axial direction of the wheel axle is in the diametrical direction in the distribution circle.
